# EUROPÄISCHE PATENTANMELDUNG

(11) **EP 4 837 889 A1**
(43) Veröffentlichungstag der Anmeldung: **11.11.2026**
(21) Anmeldenummer: 25174529.5
(22) Anmeldetag: 06.05.2025
(51) Int. Cl.: C03C 15/02

(54) **VERFAHREN ZUR STRUKTURIERUNG VON GLASELEMENTEN DURCH ÄTZPROZESSE UND VERFAHRENSGEMÄSS HERGESTELLTES GLASELEMENT**

(71) Anmelder: SCHOTT Technical Glass Solutions GmbH, 07745 Jena (DE); SCHOTT AG, 55122 Mainz (DE)
(72) Erfinder: STORCH, Christine, 07745 Jena (DE); DREISOW, Felix, 07745 Jena (DE); KUCKELKORN, Thomas, 07745 Jena (DE); WIESEKE, Hubert, 07745 Jena (DE); HÖRBERG, Annika, 55122 Mainz (DE); KRUMBHOLZ, Marco, 07745 Jena (DE)
(74) Vertreter: Schott Corporate IP

(57) **Zusammenfassung**

Die Erfindung betrifft ein Verfahren zur Herstellung eines geätzten Glaselements, bei dem ein Glaselement durch Einwirken eines wässrigen, basischen Ätzmediums zumindest bereichsweise geätzt wird. Das bereitgestellte Ätzmedium enthält Natriumhydroxid und Kaliumhydroxid mit einem Gesamtgehalt im Bereich von 15 bis 40 Gew.-%, wobei für das Gewichtsverhältnis von Natriumhydroxid und Kaliumhydroxid im Ätzmedium gilt: 0,1 ≤ m(NaOH)/m(KOH) ≤1. Weiterhin betrifft die Erfindung ein geätztes Glaselement, das mit dem erfindungsgemäßen Verfahren hergestellt wurde und in den geätzten Bereichen eine Rauheit Ra < 0,4 nm, und/oder eine Rauheit Rq < 0,5 aufweist.

## Beschreibung

Die Erfindung betrifft allgemein ein Verfahren zur Herstellung von strukturierten Glaselementen sowie ein entsprechend hergestelltes Glaselement. Insbesondere betrifft die Erfindung ein Verfahren zum Herstellen strukturierter Glaselemente durch basisches Ätzen.

### Stand der Technik

Die präzise Strukturierung von Gläsern ist in vielen Anwendungsbereichen von großem Interesse. Unter anderem werden Glassubstrate in Bereichen Camera Imaging, insbesondere 3D Camera Imaging, in der Elektrooptik wie beispielsweise L(E)D der Mikrofluidik, optische Diagnostik, Sensorik bspw. Drucksensorik, und Diagnosetechnik eingesetzt. Solche Anwendungsfelder betreffen beispielsweise Lichtsensoren, Kamerasensoren, Drucksensoren, Leuchtdioden und Laserdioden. Hier werden Glassubstrate zumeist in Form von dünnen Wafern oder Glasmembranen als Bauelemente verwendet. Darüber hinaus können Glassubstrate als Abdeckung bzw. Deckgläser in Displays wie beispielsweise in µLED-Display verwendet werden.

Um die Glassubstrate in einem weiten Anwendungsbereich einsetzen zu können, sollte die Bearbeitung zudem keine Beschädigung, Rückstände, beispielsweise abgetrenntes oder abgetragenes bzw. losgelöstes Material, oder Spannungen im Randbereich bzw. Volumen des Substrats hinterlassen. Des Weiteren sollte das Verfahren zur Produktion dieser Substrate einen möglichst effizienten Fertigungsprozess erlauben.

Die Strukturierungsprozesse beinhalten häufig basische Ätzprozesse, mit denen Teile aus dem Glassubstrat entfernt oder Oberflächen modifiziert werden. Bei dieser Ätzstrukturierung wird üblicherweise als Base Natriumhydroxid (NaOH) in einem wässrigen Ätzmedium verwendet. Natriumhydroxid wird insbesondere deshalb verwendet, da so hohe Ätzraten, also der Materialabtrag pro Zeiteinheit, realisiert werden können. Die Verwendung von Natriumhydroxid bringt jedoch einige Nachteile mit sich. So können in Ätzprozessen mit Natriumhydroxid zwar hohe Ätzraten und somit ein hoher Materialabtrag pro Zeiteinheit realisiert werden, jedoch weisen die so erhaltenen Oberflächen eine relativ hohe Rauheit auf. Hohe Rauheiten können sich bei nachfolgenden Prozessen wie beispielsweise beim Bonden der Oberflächen nachteilig auswirken.

Ein weiterer Nachteil bei der Verwendung von Ätzlösungen mit Natriumhydroxid als alleinige Base liegt in der schlechten Löslichkeit der im Prozess herausgelösten Bestandteile in der Ätzlösung. So können sich Ausfällprodukte in Form von Silikaten bilden, die wiederum zu einer Kontamination der geätzten Substrate in Form von Schlieren oder Belägen führen können.

Zudem zeigen Ätzmedien basierend auf Natriumhydroxid eine hohe Korrosionswirkung gegenüber den eingesetzten Vorrichtungen, Behältnissen bzw. deren Bauteilen, beispielsweise gegenüber Edelstahlbauteilen. Somit weisen Ätzvorrichtungen mit Edelstahlbecken und -equipment bei der Verwendung in Ätzprozessen mit Natriumhydroxid als Base relativ geringe Standzeiten auf.

Andere basische Ätzmedien wie beispielsweise wässrige Kaliumhydroxid (KOH) -Lösungen weisen diese Nachteile nicht oder nur in geringerer Ausprägung auf. Nachteilig ist hier jedoch die geringen Ätzraten, so dass entsprechende Ätzprozesse zeitaufwendig sind.

Aus der WO 2020/243211 A1 ist ein Verfahren zum Ätzen von Glassubstraten bekannt, bei denen ein eutektisches Gemisch aus Natriumhydroxid und Kaliumhydroxid verwendet wird. Hierbei wird das Ätzmedium durch eine Mischschmelze aus Natriumhydroxid und Kaliumhydroxid gebildet. Der Ätzprozess findet somit bei hohen Prozesstemperaturen von 170 bis 300°C. Zudem handelt es sich nicht um ein nasschemisches Verfahren.

### Aufgabe der Erfindung

Es besteht somit die Notwendigkeit ein Verfahren zur Strukturierung von Glassubstraten durch Ätzprozesse bereit zu stellen, welches hohe Ätzraten ermöglicht, ohne die aus dem Stand der Technik bekannten Nachteile aufzuweisen. Insbesondere sollen mit dem Verfahren geätzte Glasoberflächen mit geringen Rauheiten zugänglich sein. Das Verfahren soll zudem verbesserte Standzeiten des eingesetzten Equipments ermöglichen. Eine weitere Aufgabe besteht in der Bereitstellung eines Glassubstrates mit zumindest teilweise geätzten Bereichen, dessen geätzte Bereiche eine geringe Rauheit aufweisen.

### Offenbarung der Erfindung

Die Aufgabe der Erfindung wird bereits durch den Gegenstand des unabhängigen Anspruchs gelöst. Vorteilhafte Ausgestaltungen und Weiterbildungen sind Gegenstand der Unteransprüche.

Die Erfindung betrifft ein Verfahren zur Herstellung von Glaselementen mit zumindest bereichsweise geätzten Oberflächen bzw. ein Verfahren zum Ätzen von Glaselementen, bei dem zumindest teilweise bzw. bereichsweise durch einen Ätzprozess Material vom Glaselement abgetragen wird. Insbesondere handelt es sich bei dem Ätzprozess um einen nasschemischen, basischen Ätzprozess.

Mit dem offenbarten Verfahren kann gemäß einer Ausführungsform ein strukturiertes Glaselement erhalten werden. Unter einem strukturierten Glaselement wird im Rahmen der vorliegenden Offenbarung ein Glaselement verstanden, welche zumindest einen geätzten Bereich aufweist. Das offenbarte Ätzverfahren kann hierbei auch Teil eines Strukturierungsverfahrens sein, beispielsweise in Laserstrukturierungsverfahren oder Lithographieverfahren.

Das Verfahren zur Herstellung eines zumindest bereichsweise geätzten Glaselements umfasst zumindest die folgenden Schritte:
- Bereitstellen eines Glaselements
- Bereitstellen eines wässrigen, basischen Ätzmediums,
- Einwirken des Ätzmediums auf die zu ätzenden Bereiche des Glaselements für eine Zeitdauer t und
- Entfernen des Ätzmediums vom geätzten Glaselement,
wobei das bereitgestellte, wässrige Ätzmedium Natriumhydroxid und Kaliumhydroxid enthält mit einem Gesamtgehalt von Natriumhydroxid und Kaliumhydroxid im Bereich von 15 bis 52 Gew.-% und wobei für den Anteil p von Natriumhydroxid am Gesamtalkaligehalt $p = \frac{{m}_{NaOH}}{{m}_{NaOH} + {m}_{KOH}}$ im Ätzmedium gilt: 0 ≤ p ≤ 1, insbesondere 0,1 ≤ p ≤ 0,8, bevorzugt 0,09 ≤ p ≤ 0,8.

Das Glaselement wird mit den zu ätzenden Bereichen für eine Zeitdauer t in Kontakt mit dem wässrigen, alkalischen Ätzmedium gebracht. Das Ätzmedium weist eine flüssige Phase auf. Die flüssige Phase fungiert als Lösungsmittel, in dem Alkalimetallhydroxide gelöst sind. Unter einem wässrigen Ätzmedium wird im Sinne der Offenbarung insbesondere ein Ätzmedium verstanden, dessen flüssige Phase zumindest 48 Gew.-%, bevorzugt zumindest 70 Gew.-%, besonders bevorzugt zumindest 85 Gew.-% Wasser als Lösungsmittel enthält. Eine Ausführungsform sieht vor, dass die flüssige Phase des Ätzmediums aus Wasser besteht. Die flüssige Phase des Ätzmediums kann weitere flüssige Verbindungen, insbesondere Lösungsmittel wie beispielsweise niedermolekulare Alkohole aufweisen.

Das Ätzmedium enthält Natriumhydroxid und Kaliumhydroxid. Der Gesamtgehalt an Alkalimetallhydroxiden, insbesondere der Gehalt an Natriumhydroxid und Kaliumhydroxid im Ätzmedium liegt im Bereich von 15 bis 52 Gew.-%. Gemäß einer Ausführungsform enthält die Ätzlösung 48 bis 85 Gew.-% Wasser, vorzugsweise 60 bis 75 Gew.-% Wasser. Dies stellt eine ausreichend hohe Konzentration an Hydroxidionen für den Ätzvorgang sicher, gleichzeitig ist gewährleistet, dass Natriumhydroxid und Kaliumhydroxid im Ätzmedium in gelöster Form vorliegen und das Löslichkeitsprodukt der beim Ätzvorgang ausgelösten Glasbestandteile nicht erreicht wird, so dass eine Niederschlagsbildung verringert oder verhindert wird. Vorzugsweise weist das Ätzmedium beim Verfahren eine Temperatur kleiner als 135°C, insbesondere im Bereich von 80 bis 130 °C, vorzugsweise im Bereich von 90 bis 100°C auf.

Zum Aufbringen und Einwirken kann das Ätzmedium auf das Glaselement oder Bereiche des Glaselements aufgetragen werden. Eine andere Ausführungsform sieht vor, dass das Glaselement zumindest mit den zu ätzenden Bereichen in das Ätzmedium eingebracht wird. Das Glaselement wird vorzugsweise zumindest mit den zu ätzenden Bereichen in das Ätzmedium getaucht.

Gemäß einer Ausführungsform überwiegt der Anteil an Kaliumhydroxid im Ätzmedium. Für den Anteil von Natriumhydroxid am Gesamtalkaligehalt im Ätzmedium gilt p ≤ 0,5, insbesondere 0,1 ≤ p ≤ 0,5, vorzugsweise 0,15 ≤ p ≤ 0,3.

Überraschenderweise kann bereits durch Zugabe eines geringen Anteils von Natriumhydroxid die Ätzrate gegenüber einem Verfahren mit einem Ätzmedium, die nur Kaliumhydroxid enthält, erhöht werden. Beim offenbarten Verfahren enthält daher das Ätzmedium neben Kaliumhydroxid auch Natriumhydroxid. Der Anteil an Natriumhydroxid im Ätzmedium wird vorzugsweise so gering gehalten, dass sich dieser nicht oder zumindest nicht signifikant auf die Löslichkeit der ausgelösten Glasbestandteile auswirkt. Weiterhin weisen die mit dem offenbarten Verfahren geätzten Oberfläche eine Rauheit auf, welche deutlich unter den Rauheiten liegen, die bei vergleichbaren Strukturierungsverfahren mit Natriumhydroxid als alleinige Base im Ätzmedium erzielt werden können.

Eine andere Ausführungsform sieht vor, dass der Anteil an Natriumhydroxid im Ätzmedium größer ist als der Anteil an Kaliumhydroxid. Hierbei ist p ≥ 0,5. Insbesondere gilt bei dieser Ausführungsform 0,5 ≤ p ≤ 0,9, bevorzugt 0,7 ≤ p ≤ 0,9, besonders bevorzugt 0,7 p ≤ 0,85. Bei diesen Ausführungsformen können trotz höherer Ätzraten weiterhin niedrige Rauheiten realisiert werden. Durch den höheren Gehalt an Natriumhydroxid kann es jedoch zu einer stärkeren Beanspruchung der Anlagentechnik kommen.

Die Zugabe von Natriumhydroxid zum Ätzmedium führt hierbei zu einem starken Anstieg der Ätzrate. Die Erfinder haben herausgefunden, dass zwischen dem Mischungsverhältnis von Kaliumhydroxid und Natriumhydroxid und der Ätzrate jedoch kein linearer Zusammenhang besteht. Während die Ätzrate bei Zugabe geringer Mengen an Natriumhydroxid zunächst ansteigt, erhöht sich die Ätzrate ab einem bestimmten Mischungsverhältnis von Natriumhydroxid und Kaliumhydroxid mit steigendem Natriumhydroxidgehalt deutlich langsamer und nähert sich einem Grenzwert an. Gleichzeitig sinkt mit steigendem Natriumhydroxidgehalt die Löslichkeit der durch den Ätzvorgang ausgelösten Silikate im Ätzmedium, so dass diese ausfallen und sich in den geätzten Bereichen als Verunreinigungen ablagern können. Die Rauheit der geätzten Gläser bzw. in den geätzten Bereichen bleibt bis zu einem Gehalt von NaOH p = 0,8 niedrig, was von besonderem Vorteil für die späteren Applikationen ist. So kann ein steigender Ätzabtrag bei niedriger bzw. nicht signifikant erhöhter Rauheit der geätzten Bereiche erzielt werden.

Der offenbarte Anteil von Natriumhydroxid am Gesamtalkaligehalt im Ätzmedium ist daher so ausgewählt, dass ein Ätzverfahren ermöglicht wird, bei dem die Vorteile eines kaliumhydroxidbasierten Ätzverfahrens mit denen eines natriumhydroxidbasierten Ätzverfahrens verbunden werden.

Vorzugsweise enthält das Ätzmedium 3 bis 15 Gew.-%, bevorzugt 3 bis 12 Gew.-% und besonders bevorzugt 3 bis 9 Gew.-% Natriumhydroxid. Der Gehalt an Kaliumhydroxid im Ätzmedium liegt vorzugsweise im Bereich von 12 bis 30 Gew.-%, bevorzugt 12 bis 25 Gew.-% und besonders bevorzugt 15 bis 20 Gew.-%. Gemäß einer Ausführungsform weist das Ätzmedium einen Natriumhydroxidgehalt im Bereich von 3 bis 9 Gew.-% und einen Kaliumhydroxidgehalt im Bereich von 15 bis 20 Gew.-% auf. Die angegebenen Gehalte gelten insbesondere für ein Ätzmedium, das zu Beginn des Strukturierungsprozesses bereitgestellt wird. Durch Auslösen der Glasbestandteile können sich diese Werte im Laufe des Verfahrens, insbesondere während der Ätzzeit t, verändern.

Durch die Verwendung eines Ätzmediums umfassend sowohl Natriumhydroxid als auch Kaliumhydroxid kann überraschenderweise auch der Gesamtgehalt an Alkalihydroxiden im Ätzmedium verringert werden, ohne dass dies zu einer signifikanten Reduktion der Ätzrate führt. Eine Ausführungsform sieht vor, dass der Gehalt an Alkalihydroxiden, insbesondere an Natriumhydroxid und Kaliumhydroxid, im Ätzmedium im Bereich von 15 bis 25 Gew.-%, vorzugsweise 15 bis 20 Gew.-% oder sogar unterhalb von 20 Gew.-% liegt. Bei Ätzverfahren, bei denen nur Natriumhydroxid als Base eingesetzt wird, werden in der Regel Ätzmedien verwendet, die einen Natriumhydroxidanteil von 25 bis 30 Gew.-% aufweisen. Das Ätzmedium weist in dieser Ausführungsform somit eine geringere Alkalihydroxidkonzentration auf. Dies wirkt sich sowohl vorteilhaft auf die Standzeit der beim Verfahren eingesetzten Vorrichtungen als auch auf die Löslichkeit der ausgelösten Silikate im Ätzmedium aus.

Beim offenbarten Verfahren können bei einer Ätztemperatur im Bereich von 90 bis 135 °C, insbesondere bei einer Ätztemperatur von 95 °C Ätzraten von mehr als 2 µm/h, bevorzugt mehr als 3 µm/h oder sogar von mehr als 4 µm/h realisiert werden. Gemäß einer Ausführungsform weist das Glas folgende Zusammensetzung in mol-% auf:

| | |
|---|---|
| SiO₂ | 65 - 75 |
| B₂O₃ | 5 - 10 |
| Al₂O₃ | 1 - 4 |
| Na₂O | 3 - 8 |
| K₂O | 2 - 6 |
| ZnO | 2 - 6 |
| TiO₂ | 2 - 5 |

Beim Ätzen dieses Glases bei einer Temperatur von 95°C können dabei Ätzraten von mehr als 2 µm/h oder sogar mehr als 3 µm/h erhalten werden. Beim Strukturierungs- bzw. Ätzverfahren werden die Glasbestandteile durch die Hydroxidionen aus dem Glas des zu strukturierenden Glaselements herausgelöst. Hierbei sinkt die Konzentration an freien Hydroxidionen im Ätzmedium, gleichzeitig werden die ausgelösten Bestandteile wie beispielsweise Silikate in das Ätzmedium eingebracht. Dies kann zu Folge haben, dass die Ätzrate über den Strukturierungsprozess nicht konstant bleibt, sondern mit steigendem Silikateintrag abnimmt.

Eine Ausführungsform sieht vor, dass die Ätzrate im Bereich von 2 bis 7 µm/h, bevorzugt im Bereich von 3 bis 7 µm/h liegt. Im Vergleich dazu werden bei vergleichbaren Verfahren, bei denen jedoch das Ätzmedium als Base nur Kaliumhydroxid enthält, Ätzraten von weniger als 2 µm/h erreicht.

Das offenbarte Verfahren ist insbesondere für Mehrkomponentengläser, insbesondere Borosilikatgläser geeignet.

Gemäß einer Ausführungsform weist das bereitgestellte Glas folgende Zusammensetzung auf Oxidbasis in mol.-% auf:

| | |
|---|---|
| SiO₂ | 75 - 85 |
| B₂O₃ | 9 - 12 |
| Al₂O₃ | 0,5 - 3 |
| Na₂O | 2 - 5 |
| K₂O | 0,1 - 1 |

Die mit dem offenbarten Verfahren geätzten Bereiche des Glaselements weisen geringe Rauheiten im nm-Bereich auf. Gemäß einer Ausführungsform beträgt der quadratische Mittelwert der Rauheit Rq einer mit dem offenbarten Verfahren strukturierten Oberfläche höchstens 0,6 nm, bevorzugt höchstens 0,5 nm. Der Rauheitswert Rq wurde dabei mit einem Weißlichtinterferometer bestimmt. Insbesondere liegt der quadratische Mittelwert Rq im Bereich von 0,05 bis 0,6 nm, bevorzugt im Bereich von 0,05 bis 0,5 nm.

Alternativ oder zusätzlich weist ein mit dem offenbarten Verfahren geätzter Bereich eine arithmetrische Mittenrauheit Ra von höchstens 0,5 nm, bevorzugt höchsten 0,4 nm auf. Der Rauheitswert Rq wurde dabei mit einem Weißlichtinterferometer bestimmt. Insbesondere liegt die arithmetrische Mittenrauheit Ra im Bereich von 0,05 bis 0,5 nm, bevorzugt im Bereich von 0,05 bis 0,4 nm.

Die Erfinder konnten hierbei überraschenderweise feststellen, dass bereits die Zumischung von geringen Mengen KOH zu einer NaOH-haltigen Ätzlösung zu geringen Rauheiten bei gleichzeitigen guten Ätzraten führt. So führt ein Ätzabtrag mit reiner 30%igen KOH bei einer Ätztemperatur von 95 °C zu einer Zielrauheit von Rq im Bereich von 0,3 - 0,45 nm. Eine Ätzung mit reiner NaOH führt dagegen zu einem unerwünschten Anstieg der Rauheit Rq > 0,7 nm. Durch die Zugabe geringer Mengen an KOH zur Ätzlösung können jedoch geätzte Bereiche mit geringen Rauheiten erhalten werden. Noch bei einem Anteil an NaOH p= m(NaOH)/m(NaOH)+m(KOH) von 0,8 können nach dem Ätzvorgang Rauheit Ra von weniger als 0,5 nm erzielt werden.

Die Erfindung soll nachfolgend anhand der Figuren und Ausführungsbeispiele und ohne Beschränkung hierauf eingehender beschrieben werden. Gleiche Bezugszeichen bezeichnen dabei gleiche oder ähnliche Elemente.

Es zeigen:
Fig. 1 eine schematische Darstellung eines Glaselementes vor dem Ätzverfahren gemäß einem ersten Ausführungsbeispiel,
Fig. 2: eine schematische Darstellung des Ätzverfahrens an dem in Fig. 1 dargestellten ersten Ausführungsbeispiel,
Fig. 3: eine schematische Darstellung eines geätzten Glaselementes,
Fig. 4: eine graphische Darstellung des Zusammenhangs zwischen Natriumhydroxidgehalt im Ätzmedium p und der Ätzrate
Fig. 5 eine graphische Darstellung des Zusammenhangs zwischen dem Anteil an NaOH im Ätzmedium p und der Rauheit der strukturierten Bereiche.
Fig. 6 eine schematische Darstellung eines Glaselements vor dem Ätzverfahren gemäß einem zweiten Ausführungsbeispiel,
Fig. 7 und 8: eine schematische Darstellung des Ätzverfahrens an dem in Fig. 6 dargestellten zweiten Ausführungsbeispiel, und
Fig. 9 eine schematische Darstellung eines geätzten Glaselements gemäß der zweiten Ausführungsform.

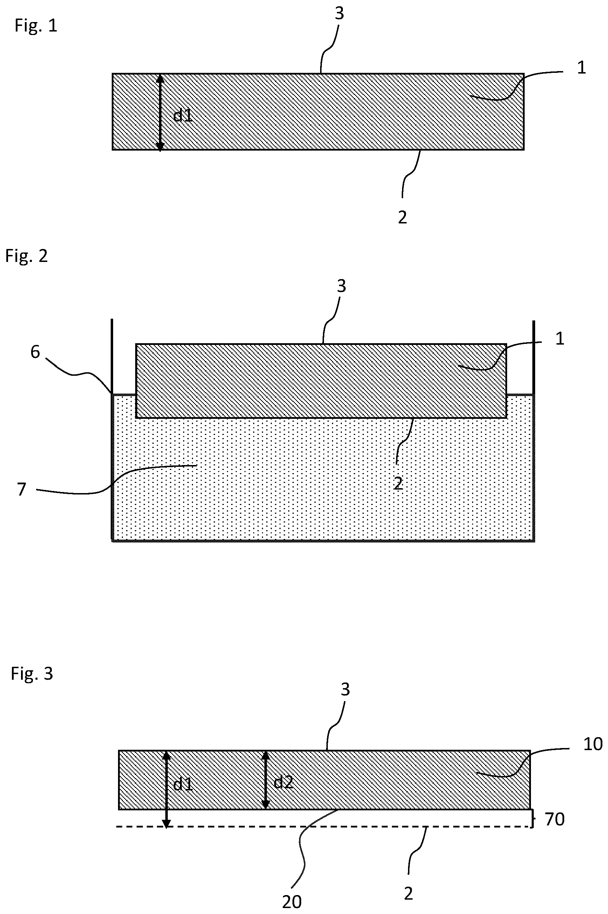

Fig. 1 zeigt schematisch ein plattenförmiges Glaselement 1 gemäß einem ersten Ausführungsbeispiel, welches mit dem offenbarten Verfahren geätzt wird. Das Glaselement 1 weist eine erste Oberfläche 2 und eine zweite, der ersten gegenüberliegend angeordnete Oberfläche 3 auf. Der Abstand zwischen der ersten Oberfläche 2 und der zweiten Oberfläche 3 entspricht der Glasdicke d1.
Fig. 2 stellt schematisch den Schritt des offenbarten Verfahrens dar, in dem das Glaselement 1 bereichsweise in Kontakt mit dem Ätzmedium 7 gebracht wird. In dem in Fig. 2 gezeigten Ausführungsbeispiel wird das Glaselement 1 mit der ersten Oberfläche 2 in ein Ätzbad 6 umfassend das Ätzmedium 7 getaucht.

Das Ätzmedium 7 ist in dem in Fig. 2 dargestellten Ausführungsbeispiel eine wässrige Lösung von Natriumhydroxid und Kaliumhydroxid, wobei der Anteil an Natriumhydroxid 15 Gew.-% und der Anteil an Kaliumhydroxid 5 Gew.-% beträgt. Der Gesamtgehalt an Alkalimetalloxiden beträgt somit 20 Gew.-%. Neben den Alkalimetalloxiden können weitere Verbindungen in der flüssigen Phase des Ätzmediums 7 enthalten sein. Hierbei kann es sich insbesondere um Hilfsstoffe wie beispielsweise Komplexbildner handeln. Diese können beispielsweise eingesetzt werden, um die Löslichkeit der aufgelösten Glasbestandteile im Ätzmedium 7 zu erhöhen. Dies ist insbesondere vorteilhaft, wenn das Glas des zu strukturierenden Glaselements 1 einen hohen Anteil an Erdalkalioxiden, insbesondere Calciumoxid aufweist, welche beim Ätzprozess schwerlösliche Silikate bilden.

Das Ätzmedium 7 weist während des Ätzprozesses eine Temperatur im Bereich von 90 bis 100 °C auf. Hierdurch wird die Ätzreaktion beschleunigt. Die Reaktionstemperatur wird dabei durch den Siedepunkt des Ätzmediums 7 begrenzt.

Das Glaselement 1 im vorliegenden weist folgende Zusammensetzung auf Oxidbasis in mol-% auf:

| | |
|---|---|
| SiO₂ | 83,3 |
| B₂O₃ | 11,3 |
| Al₂O₃ | 1,5 |
| Na₂O | 3,5 |
| K₂O | 0,4 |

Die Oberfläche 2 des Glaselements 1 wird dem Ätzmedium ausgesetzt, so dass ausgehend von der Oberfläche 2 Material vom Glaselement abgetragen wird. Bei dem in Fig. 3 gezeigten Ausführungsbeispiel verringert sich dadurch die Dicke des Glaselementes 1. So weist das geätzte Glaselement 10 nach dem Ätzvorgang eine Dicke d2 auf. Die Differenz der Glasdicken d1 und d2 ist dabei der Abtrag 70. Die Geschwindigkeit, mit der das Material abgetragen wird, kann über die Ätzrate, auch als Abtragsrate bezeichnet, angegeben werden. Das Glaselement 1 verbleibt über eine Zeitdauer t im Ätzmedium 7, bis der gewünschte Abtrag 70 erreicht und das geätzte Glaselement 10 erhalten wird. Nach der Ätzdauer t wird das geätzte Glaselement 10 aus dem Ätzbad 6 entfernt und gegebenenfalls gereinigt. Im gezeigten Ausführungsbeispiel liegt die Ätzdauer t im Bereich von 5 bis 6 h. Dies ist mit der Ätzdauer von Ätzverfahren mit einem Ätzmedium mit Natriumhydroxid als alleinige Base vergleichbar.

Die geätzte Oberfläche 20 weist dabei eine Mittenrauheit Ra von weniger als 0,4 nm auf. Zudem ist der quadratische Mittelwert der Rauheit Rq kleiner als 0,6 nm. Die geringen Rauheiten sind für nachfolgende Prozesse wie beispielsweise eine Metallisierung vorteilhaft.

Tabelle 1 zeigt die Zusammensetzung verschiedener Ätzmedien sowie die ermittelten Ätzraten verschiedener Ausführungsbeispiele 1 bis 3 sowie der Vergleichsbeispiele 4 bis 6.

**Tabelle 1**

| Bsp. | c(NaOH) Gew.-% | c(KOH) Gew.-% | C(NaOH+KOH) Gew.-% | p | Ätzrate [µm/h] | Rq [nm] | Ra [nm] |
|---|---|---|---|---|---|---|---|
| 1 | 6 | 24 | 30 | 0,2 | 1,7 | 0,42 | 0,33 |
| 2 | 7,2 | 18 | 25,2 | 0,25 | 2,8 | 0,43 | 0,33 |
| 3 | 7,2 | 18 | 25,2 | 0,25 | 3,3 | 0,40 | 0,32 |
| 4 | 14,9 | 13,5 | 28,4 | 0,5 | 4 | 0,41 | 0,32 |
| 5 | 24 | 6 | 30 | 0,8 | 7,1 | 0,42 | 0,33 |
| 6 | 0 | 30 | 30 | 0 | 1,8 | 0,43 | 0,34 |
| 7 | 30 | 0 | 30 | 1 | 6,8 | 0,72 | 0,55 |

Bei allen Beispielen wurde ein Glaselement bei 95°C für 6 Stunden geätzt. Anschließend wurde der Ätzabtrag bestimmt. Die einzelnen Beispiele unterscheiden sich in Hinblick auf die Natriumhydroxid- und Kaliumhydroxidgehalte im Ätzmedium.

Das Glaselement dieser Ausführungsbeispiele weist folgende Zusammensetzung auf Oxidbasis in mol-% auf:

| | |
|---|---|
| SiO₂ | 69,60 |
| B₂O₃ | 7,90 |
| Al₂O₃ | 2,70 |
| Na₂O | 6,70 |
| K₂O | 4,80 |
| ZnO | 4,73 |
| TiO₂ | 3,35 |

Bei den Beispielen 1 bis 5 wurden im Ätzmedium sowohl Natriumhydroxid als auch Kaliumhydroxid eingesetzt. Die Ätzmedien der Beispiele 4 und 5 weisen einen höheren Gehalt an Natriumhydroxid als an Kaliumhydroxid auf. Bei Vergleichsbeispiel 6 wurde im Ätzmedium nur Kaliumhydroxid, bei Vergleichsbeispiel 7 nur Natriumhydroxid als Alkalimetalloxid eingesetzt.

Aus Tabelle 1 wird deutlich, dass der Ätzabtrag einer Ätzlösung mit Natriumhydroxid (Vergleichsbeispiel 7) als alleinige Base um den Faktor 3 bis 4 gegenüber dem Ätzabtrag mit einer Ätzlösung mit Kaliumhydroxid als alleinige Base (Vergleichsbeispiel 6) erhöht ist. Überraschenderweise führt bereits die Verwendung einer Ätzlösung mit Natriumhydroxid und Kaliumhydroxid bereits bei relativ geringen Anteilen an Natriumhydroxid zu einer signifikanten Erhöhung der Ätzrate. Die Ätzlösung des Beispiels 2 enthält lediglich 7,2 Gew.-% Natriumhydroxid bei einem Verhältnis p= m(NaOH)/(m(KOH)+m(NaOH)) von 0,25. Trotzdem hat sich die Ätzrate gegenüber einer Ätzlösung mit Kaliumhydroxid als alleinige Base deutlich erhöht, während die Rauheiten Ra und Rq der strukturierten Bereiche gegenüber einem Ätzverfahren mit reiner KOH (Beispiel 6) nicht erhöht sind.

Tabelle 1 zeigt, dass mit Ätzlösungen, die sowohl Natriumhydroxid als auch Kaliumhydroxid enthalten, der Gesamtgehalt an Alkalimetallhydroxiden gesenkt werden kann, ohne dass sich dies signifikant auf die Ätzrate auswirkt. So weist Beispiel 2 einen Alkalihydroxidgehalt von nur 25 Gew.-% auf, zeigt jedoch eine höhere Ätzrate als eine reine Kaliumhydroxid Ätzlösung mit 30 Gew.-% Alkalihydroxiden. Beispiel 2 zeigt somit, dass mit dem offenbarten Verfahren durch Zugabe von Natriumhydroxid zur Kaliumhydroxid-Ätzlösung der Gehalt an eingesetzten Alkalihydroxiden deutlich verringert werden kann, ohne dass sich dies nachteilig auf die Ätzrate auswirkt. Dies ist aus prozesstechnischer Sicht aus mehreren Gründen vorteilhaft. So führt zum einen die Verwendung einer verdünnteren Ätzlösung zu einer geringeren Korrosion an den entsprechenden Vorrichtungen, so dass deren Standzeit verlängert wird. Die geringere Konzentration an Alkalihydroxiden führt zudem dazu, dass die Löslichkeit der ausgelösten Glasbestandteile, insbesondere der Silikate, steigt. Zudem weist die Ätzlösung eine geringere Viskosität auf, was sich vorteilhaft auf die Prozessführung auswirkt.

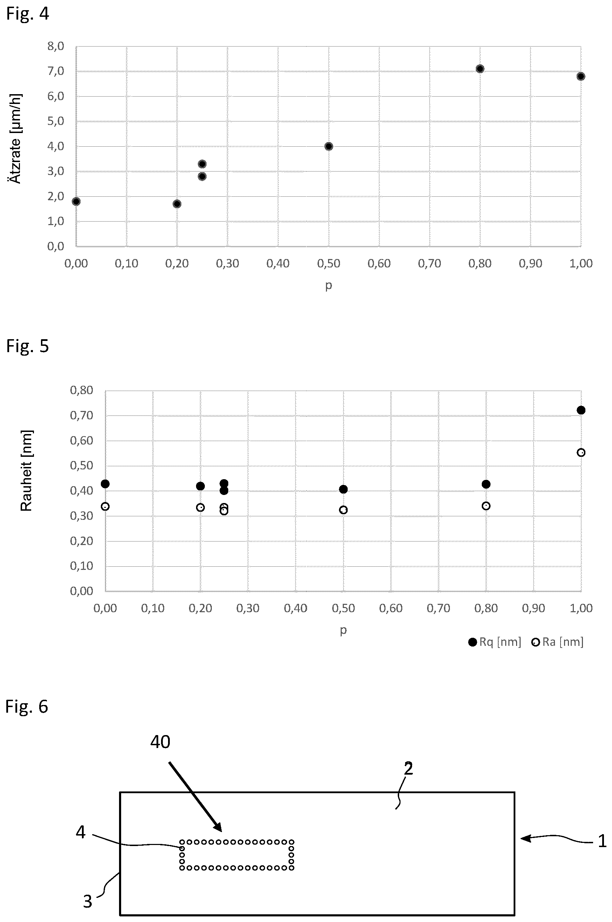

Aus Tabelle 1 wird auch deutlich, dass durch Zugabe von Natriumhydroxid zur Kaliumhydroxidätzlösung die Ätzrate erhöht werden kann, die Erhöhung der Ätzrate jedoch nicht linear mit der Natriumhydroxidkonzentration in der Ätzlösung zunimmt. Der Zusammenhang zwischen Natriumhydroxidgehalt der Ätzlösung und der Ätzrate wird in Fig. 4 dargestellt.

Anhand von Fig. 4 wird deutlich, dass die Ätzrate nicht linear mit dem NatriumhydroxidGehalt im Ätzmedium korreliert. Vielmehr steigt die Ätzrate zunächst stark an und nähert sich dann asymptotisch einem Grenzwert an, welcher der Ätzrate in einem reinen Natriumhydroxid-Ätzmedium entspricht. In Fig. 4 wird dieser Zusammenhang für die in Tabelle 1 aufgeführten Beispiele 1 bis 6 gezeigt. Überraschenderweise weisen bereits Ätzmedien, bei denen der Kaliumhydroxidgehalt gegenüber dem Natriumhydroxidgehalt deutlich überwiegt, hohe Ätzraten auf.

Fig. 5 zeigt den Zusammenhang der Rauheiten Ra und Rq der strukturierten Bereiche mit dem Gehalt an Natriumhydroxid im Ätzmedium. Es wird deutlich, dass selbst bei hohen Anteilen an NaOH an der Gesamtalkalihydroxidkonzentration im Ätzmedium Rauheiten erzielt werden können, die im Wesentlichen denen von Ätzprozessen mit reiner KOH als Ätzmedium erhalten werden. So weisen sogar die geätzten Bereiche des Beispiels 5 mit einem Verhältnis p = m(NaOH)/(m(NaOH)+m(KOH)) von 0,8 eine Rauheit Ra von lediglich 0,33 nm und eine Rauheit Rq von nur 0,42 nm auf. Im Unterschied dazu beträgt die Rauheit Rq beim Vergleichsbeispiel 7, bei dem das Ätzmedium nur NaOH enthält und somit einen Anteil an NaOH im Ätzmedium p von 1 aufweist, 0.77 nm. Die mit NaOH als alleinigem Alkalihydroxid geätzten Oberflächen weisen somit deutlich größere Rauheiten auf als Oberflächen, die mit den offenbarten Ätzlösungen umfassend sowohl KaOH als auch NaOH geätzt wurden.

Durch die Zugabe von NaOH zu einem KOH-haltigen Ätzmedium kann somit die Ätzrate erhöht werden, ohne dass es zu einer signifikanten Erhöhung der Rauheiten in den strukturierten Bereichen kommt. Überraschenderweise ist dies selbst dann der Fall, wenn der Gehalt an NaOH im Ätzmedium größer ist als der Gehalt an KOH. So können selbst mit Ätzmedien mit einem Verhältnis von p = m(NaOH)/(m(NaOH)+m(KOH)) von 0,8 Rauheiten in den strukturierten Bereichen erzielt werden, deren Rauheiten sich im Wesentlichen nicht von denen mit reinen KOH-Ätzmedien strukturierten Bereichen unterscheiden.

Fig. 6 zeigt schematisch ein plattenförmiges Glaselement 1 mit einer ersten Oberfläche 2 und eine zweiten, der ersten gegenüberliegend angeordneten Oberfläche 3 gemäß einem weiteren Ausführungsbeispiel. Das Glas des Glaselements 1 weist hierbei die gleiche Zusammensetzung auf wie das Glas des ersten Ausführungsbeispiels.

In dem in Fig. 6 dargestellten Ausführungsbeispiel weist das Glaselement zudem eine Vielzahl von Schädigungen 4 auf, die als filamentförmige Kanäle ausgebildet sind. Die Kanäle verlaufen in ihrer Längsrichtung quer zur ersten und zweiten Oberfläche 2, 3 des Glaselementes 1 und durchbrechen beide Oberflächen 2, 3. Die Kanäle 4 sind auf dem Glaselement 1 derart nebeneinander angeordnet, dass eine Vielzahl von Kanälen 4 eine Perforation ergibt, und diese Perforation beziehungsweise diese Vielzahl von Kanälen Umrisse einer Struktur 40 formen. Die Kanäle 4 im Glaselement 1 wurden im dargestellten Ausführungsbeispiel mit Hilfe eines Ultrakurzpulslasers erzeugt. In dem in Fig. 6 gezeigten Ausführungsbeispiel erfolgte somit vor dem Ätzvorgang eine Strukturierung des Glaselements durch ein Laserstrukturierungsverfahren.

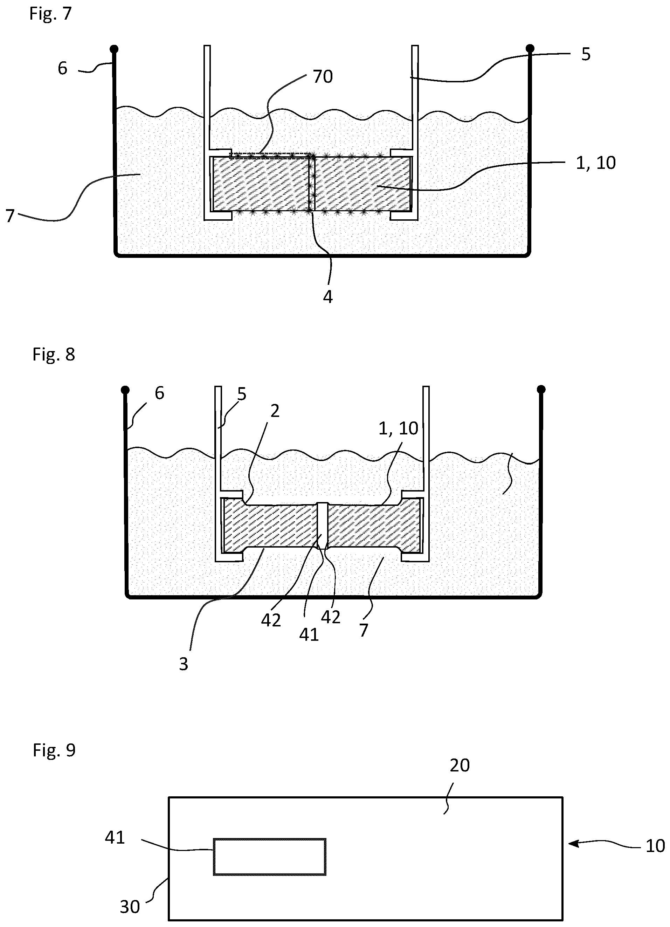

Fig. 7 stellt den Schritt des offenbarten Ätzverfahrens schematisch dar, bei dem das Glaselement 1 in Kontakt mit dem Ätzmedium 7 gebracht wird. Das Glaselement 1 wird an Halterungen 5 ablösbar angeordnet. Dabei kann das Glaselement 1 lediglich auf den Halterungen 5 aufliegen, oder an diesen fixiert werden bzw. sein. Das Glaselement 1 wird mittels der Halterungen 5 in das Ätzmedium 7 gehalten und insbesondere getaucht. Das Ätzmedium 7 ist im Ätzbad 6 angeordnet. Das Ätzbad 6 kann beispielsweise ein Edelstahltank sein. Das Ätzmedium 7 weist hierbei die gleiche Zusammensetzung auf wie im ersten Ausführungsbeispiel. Dadurch, dass das Glaselement 1 dem Ätzmedium 7 ausgesetzt wird, wird Material des Glaselements 1 abgetragen, wodurch ein Abtrag 70 entsteht. Die Geschwindigkeit, mit der das Material abgetragen wird, kann über die Ätzrate, auch als Abtragsrate bezeichnet, angegeben werden. Bei dem dargestellten Ausführungsbeispiel werden die Kanäle 4 durch den Materialabtrag vergrößert. Das Glaselement 1 verbleibt über eine Zeitdauer t im Ätzmedium 7, bis der gewünschte Abtrag erreicht und das strukturierte Glaselement 10 erhalten wird. Nach der Ätzdauer t wird das strukturierte Glaselement 10 aus dem Ätzbad 6 entfernt und gegebenenfalls gereinigt. Im gezeigten Ausführungsbeispiel liegt die Ätzdauer t im Bereich von 5 bis 6 h. Dies ist mit der Ätzdauer von Ätzverfahren mit einem Ätzmedium mit Natriumhydroxid als alleinige Base vergleichbar.

Fig. 8 zeigt schematisch den Ätzvorgang aus Fig. 7 zu einem fortgeschrittenen Zeitpunkt. In den Bereichen des Glaselements 1, die nicht von den Halteelementen 5 abgeschirmt sind, wurde Material abgetragen. Dies betrifft im Wesentlichen die Kanäle 4, kann aber auch bestimmte Bereiche der ersten 2 und/oder zweiten 3 Oberfläche betreffen. Dabei wurden Kanalwandungen mehrerer Kanäle 4 vorzugsweise so weit abgetragen, dass mehrere Kanäle 4 vereinigt wurden, wodurch eine Ausnehmung 41 als Struktur erzeugt wurde.

Fig. 9 zeigt schematisch den so erhaltenen geätzten Glasartikel 10. Hierbei wurde der Glasartikel 1 durch den Ätzvorgang auch strukturiert. Der geätzte Glasartikel 10 weist nun eine Ausnehmung 41 auf, die durch den Ätzvorgang erzeugt wurde.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Glaselement
- 2, 3: Seitenflächen des Glaselements 1
- 4: Kanäle
- 5: Haltevorrichtung
- 6: Ätzbad
- 7: Ätzmedium
- 10: geätztes Glaselement
- 20, 30: geätzte Seitenflächen des geätzten Glaselements 10
- 40: Anordnung der Kanäle 4
- 41: Ausnehmung
- 42: Wandung der Ausnehmung 41
- 70: Abtrag

## Patentansprüche

1. Verfahren zur Herstellung eines zumindest bereichsweise geätzten Glaselements (10) umfassend zumindest die folgenden Schritte:
- Bereitstellen eines Glaselements (1)
- Bereitstellen eines wässrigen, basischen Ätzmediums (7),
- Einwirken des Ätzmediums (7) auf die zu ätzenden Bereiche des Glaselements (1) für eine Zeitdauer t
- Entfernen des Ätzmediums (7) vom geätzten Glaselement (10),
wobei das bereitgestellte, wässrige Ätzmedium (7) Natriumhydroxid und Kaliumhydroxid enthält mit einem Gesamtgehalt von Natriumhydroxid und Kaliumhydroxid im Bereich von 15 bis 52 Gew.-% und für den Anteil an Natriumhydroxid im Ätzmedium p mit p = m(NaOH)/(m(NaOH)+m(KOH)) gilt: 0 < p < 1.

2. Verfahren gemäß dem vorstehenden Anspruch, wobei das Ätzmedium (7) eine Temperatur im Bereich von 80 bis 135°C, bevorzugt im Bereich von 90 bis 100°C aufweist.

3. Verfahren gemäß einem der vorstehenden Ansprüche, wobei der Gesamtgehalt an Natriumhydroxid und Kaliumhydroxid im Ätzmedium (7) im Bereich von 15 bis 25 Gew.-%, bevorzugt im Bereich von 15 bis 20 Gew.-% liegt.

4. Verfahren gemäß einem der vorstehenden Ansprüche, wobei der Gehalt an Natriumhydroxid im Ätzmedium (7) 3 bis 15 Gew.-%, bevorzugt 3 bis 12 Gew.-% und besonders bevorzugt 3 bis 9 Gew.-% beträgt.

5. Verfahren gemäß einem der vorstehenden Ansprüche, wobei der Gehalt an Kaliumhydroxid im Ätzmedium (7) 12 bis 30 Gew.-%, bevorzugt 15 bis 25 Gew.-% und besonders bevorzugt 20 bis 25 Gew.-% beträgt.

6. Verfahren gemäß einem der vorstehenden Ansprüche, wobei das Ätzmedium (7) zumindest 60 Gew.-% Wasser, bevorzugt zumindest 70 Gew.-%, besonders bevorzugt zumindest 80 Gew.-% Wasser enthält.

7. Verfahren gemäß einem der vorstehenden Ansprüche, wobei für p = m(NaOH)/(m(NaOH)+m(KOH)) gilt: p ≤ 0,9, bevorzugt 0,1 ≤ p ≤ 0,9, besonders bevorzugt 0,1 ≤ p ≤ 0,5 oder 0,7 ≤ p ≤ 0,9.

8. Verfahren gemäß einem der vorstehenden Ansprüche, wobei das Glaselement (1) in den Bereichen, die in Kontakt mit dem Ätzmedium (7) gebracht werden, mit einer Ätzrate von zumindest 2 µm/h, bevorzugt zumindest 3 µm/h, besonders bevorzugt zumindest 4 µm/h geätzt wird und/oder die Ätzrate im Bereich von 2 bis 7 µm/h, bevorzugt 2,5 bis 7 µm/h geätzt wird.

9. Geätztes Glaselement (10) umfassend eine zumindest bereichsweise geätzte Oberfläche (2, 3), hergestellt durch ein Verfahren gemäß einem der vorstehenden Ansprüche, wobei das geätzte Glaselement (10) in den geätzten Bereichen (41) eine Rauheit Ra < 0,5 nm und/oder eine Rauheit Rq < 0,6 nm aufweist.

10. Geätztes Glaselement (10) gemäß dem vorstehenden Anspruch, wobei das geätzte Glaselement (10) in den geätzten Bereichen (41) eine Rauheit Ra < 0,4 nm, bevorzugt im Bereich von 0,05 bis 0,4 nm und/oder eine Rauheit Rq < 0,5, bevorzugt im Bereich von 0,05 bis 0,5 nm aufweist.

11. Geätztes Glaselement (10) gemäß einem der beiden vorstehenden Ansprüchen, wobei das Glas des Glaselements (10) folgende Zusammensetzung in mol-% aufweist:
| | |
|---|---|
| SiO₂ | 75 - 85 |
| B₂O₃ | 9 - 12 |
| Al₂O₃ | 0,5 - 3 |
| Na₂O | 2 - 5 |
| K₂O | 0,1 - 1 |

12. Geätztes Glaselement (10) gemäß Anspruch 10 oder 11, wobei das Glas des Glaselements (10) folgende Zusammensetzung in mol-% aufweist:
| | |
|---|---|
| SiO₂ | 65 - 75 |
| B₂O₃ | 5 - 10 |
| Al₂O₃ | 1 - 4 |
| Na₂O | 3 - 8 |
| K₂O | 2 - 6 |
| ZnO | 2 - 6 |
| TiO₂ | 2 - 5 |
